Europäisches Patentamt

European Patent Office

Office européen des brevets

(11) Publication number: **0 279 454**
**A2**

## (12) EUROPEAN PATENT APPLICATION

(21) Application number: 88102456.6

(22) Date of filing: 19.02.88

(51) Int. Cl.⁴: **G01N 31/12**

(30) Priority: 20.02.87 JP 24436/87 U

(43) Date of publication of application:
24.08.88 Bulletin 88/34

(84) Designated Contracting States:
**DE FR GB SE**

(71) Applicant: **HORIBA, LTD.**
**2 Miyanohigashi-machi Kissyoin**
**Minami-ku Kyoto(JP)**

(72) Inventor: **Yamada, Takeshi**
**11-5, 3-Chome, Kitaohji**
**Ohtsu-city Shiga-prefecture(JP)**
Inventor: **Chishiro, Mitsuhiko**
**149-1, Chishiro-cho**
**Moriyama-city Shiga-prefecture(JP)**
Inventor: **Tsuji, Katsuya**
**3-3, 3-Chome, Mizukidohri Hyogo-ku**
**Kobe-city Hyogo-prefecture(JP)**

(74) Representative: **Patentanwälte TER MEER -**
**MÜLLER - STEINMEISTER**
**Mauerkircherstrasse 45**
**D-8000 München 80(DE)**

(54) **Assistant combustion agent for the use in a high-frequency combustion furnace.**

(57) Disclosed is an assistant combustion agent for the use in a high-frequency combustion furnace comprising tungsten powder and tin powder mixed in a predetermined ratio and molded into a predetermined shape.

EP 0 279 454 A2

# ASSISTANT COMBUSTION AGENT FOR THE USE IN A HIGH-FREQUENCY COMBUSTION FURNACE

## BACKGROUND OF THE INVENTION

### Field of the Invention

The present invention relates to an assistant combustion agent used in the elementary analysis of carbon, sulfur or the like contained in steel and iron samples and nonferrous metal samples carried out in a high-frequency combustion furnace.

### Description of the Prior Art

As one of the methods of carrying out an elementary analysis of steel and iron samples and nonferrous metal samples a method is known wherein a crucible made from ceramic having therein enclosed a weighed steel and iron sample and a nonferrous metal sample is placed in a high-frequency combustion furnace and then heated by passing a high-frequency current through said sample and blowing an oxygen gas at the same time to burn said sample. Subsequently, the formed combustion gas is trans-ported to an analyszer by a carrier gas where the combustion gas is analyzed.

However, according to the above-described combustion, the sample only cannot provide for a sufficiently high combustion temperature (1,600 to 1,800°C) and carbon and sulfur are insufficiently extracted. Therefore, in general tungsten and tin have been used as an assistant combustion agent.

But, the above described method is disadvantageous in that, although tungsten is advantageous with respect to the specific resistance, the heat gene rated by the high-frequency current and the combustion heat which are increased to be liable to promote the oxidation process, tungsten only cannot cover the whole sample when the sample is formed in a block-like shape or the weight of the sample is relatively large, and as a result, only those portions brought into contact with tungsten are heated up to high temperatures to burn out, whereby producing metallic films A, A and cavities B, B, as shown in Fig. 4, and the supply of oxygen gas to these cavities B, B becomes insufficient making the extraction of carbon and sulfur incomplete.

On the other hand, although tin is advantageous in that the melting point and the viscosity of the sample are reduced to bring the oxygen gas satisfactorily into contact with the whole sample whereby a satisfactory extraction can be achieved. On the other hand, tin is disadvantageous in that it cannot effect generation of the heat as tungsten, whereby the analysis becomes difficult.

Accordingly, in order to burn satisfactorily the sample and to effect the complete extraction even when the sample is formed in a block-like shape or the weight of the sample is relatively large, a mixture comprising tungsten and tin in a predetermined ratio has been provided for as an assistant combustion agent.

By preparing the mixture comprising tungsten and tin, tungsten and tin have been separately weighed and their mixture has been used as the assistant combustion agent. The assistant combustion agent has been charged together with the sample into the crucible. However, not only the mixture has been inferior inuniformity but also the mixing process has taken much time, whereby the efficiency of the analytical operation itself was lowered.

A method wherein tungsten is coated with tin or tin is coated with tungsten to integrate tungsten with tin has been described in the published Japanese Patent Application No. Sho 59-191671. This method has been proposed to save time required for mixing tungsten with tin in the analytical operation and to carry out the analytical operation efficiently.

However, since tin is coated onto the surface of tungsten particles by immersing granular tunsten having a particle diameter of for example 1.0 mm in molten tin so that tungsten is encapsulated by tin by coating, it has been found disadvantageous that the mixing ratio of tungsten an tin in the assistant combustion agent is apt to fluctuate.

## SUMMARY OF THE INVENTION

The present invention has been achieved taking into consideration the above described matters.

It is an object of the present invention to provide a uniform assistant combustion agent which is free from the above-described disadvantages.

In order to achieve the above described object, an assistant combustion agent for the use in a high-frequency combustion furnace according to the present invention has been provided which is characterized by comprising tungsten powder and tin powder mixed in a predetermined ratio and molded into a predetermined shape.

According to the invention, the integrated assembly formed of the mixture comprising tungsten and tin in a predetermined ratio is pre-prepared and superior in uniformity. Therefore, for the sure combustion of the sample and the desired extraction, the assistant combustion agent of the invention is charged into the crucible in a predetermined quantity in accordance with the quantity or size of the sample in the analytical operation.

## BRIEF DESCRIPTION OF THE DRAWINGS

The invention will be explained by means of the accompanying figures.

Fig. 1 shows a diagram wherein the manufacture of the assistant combustion agent according to the present invention is explained;

Fig. 2 shows the cross section of one example of a high-frequency heating furnace;

Fig. 3 shows a diagram wherein the phenomenon occuring when the assistant combustion agent according to the present invention is used is explained and

Fig. 4 shows a diagram wherein the phenomenon occuring when merely tungsten is used as an assistant combustion agent is explained.

## DESCRIPTION OF THE PREFERRED EMBODIMENT

One preferred embodiment of the present invention is described below with reference to the drawings.

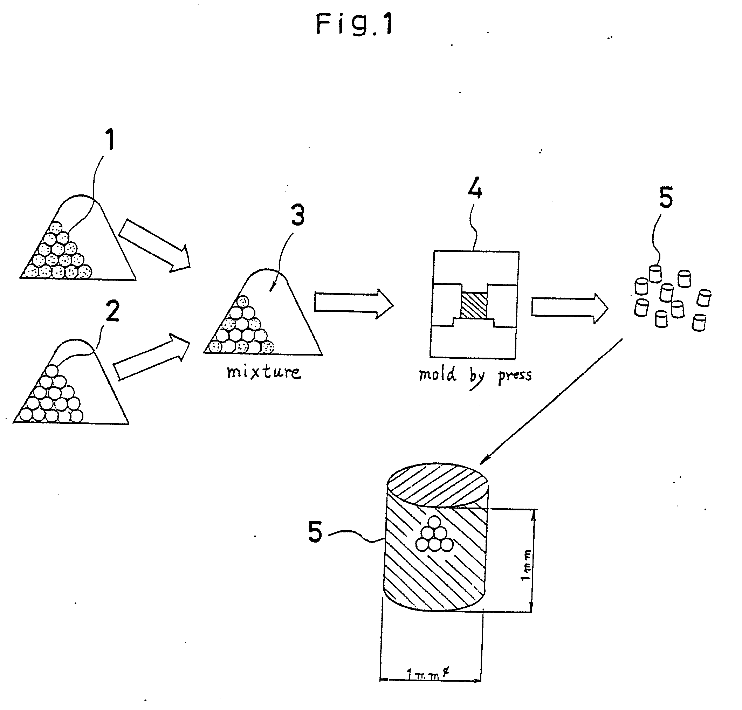

Fig. 1 shows a process chart of the manufacture of an assistant combustion agent according to the present invention, wherein reference numeral 1 designates a tungsten powder of high purity (having a diameter of for example 70 $\mu$m) and reference numeral 2 designates a tin powder of high purity (having a diameter of for example 50 to 70 $\mu$m). These powders are separately weighed and then sufficiently blended as to obtain a mixture comprising tungsten powders and tin powders at a ratio of for example 80 : 20.

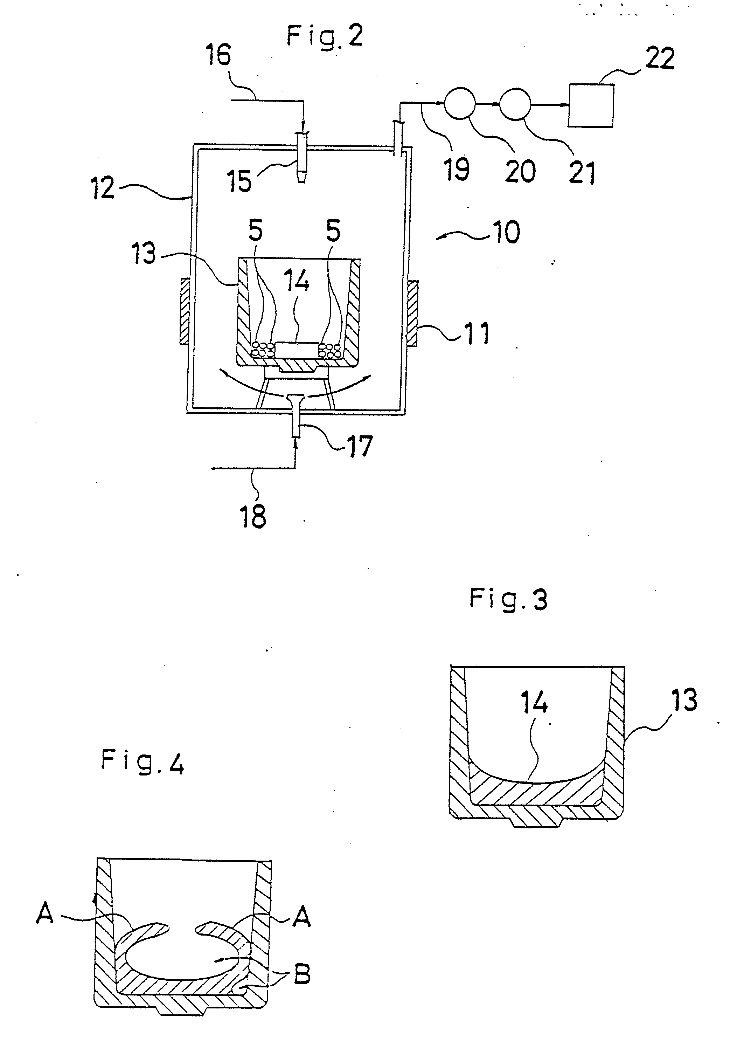

Subsequently, a mixture 3 obtained by sufficiently blending in the above described manner is molded in for example a press 4 to form a columnar assistant combustion agent 5 having a diameter of for example 1 mm and a height of for example 1 mm. The assistant combustion agent 5 formed in such manner is used for combustion used in a high-frequency heating furnace shown in Fig. 2.

In Fig. 2, reference numeral 10 designates a high-frequency heating furnace comprising a closed furnace 12 provided with a high-frequency current-developing device 11. A crucible 13 is provided in the closed furnace 12 having a sample 14 therein enclosed (although sample 14 is shown in a block-like shape, it may be also used in the shape of a stock or as a powder). At the same time, an assistant combustion agent 5 is present in said crucible 13 in a predetermined quantity. Reference numeral 15 designates a blowing nozzle suspended from the top of the closed furnace 12 directed towards the inside of the crucible 13 for blowing an oxygen gas stream onto sample 14 and the assistant combustion agent 5 present within crucible 13. Reference numeral 16 designates an oxygen gas supply passage. Reference numeral 17 designates a discharge nozzle provided at the bottom of the closed furnace 12 directed upwards for blowing out a carrier gas for carrying and extracting gases formed by the combustion of the sample 14 within crucible 13.

Reference numeral 18 designates a carrier gas passage. Reference numeral 19 designates a gas passage for withdrawing and supplying said gases formed to the analyzers 20, 21. Reference numeral 22 designates an exhaust-gas treatment device.

As shown in Fig. 3, the sample 14 is burned using the assistant combustion agent 5 in the high-frequency heating furnace 10 of the above described construction. It was obvious that the sample 14 is molten under the condition that the fluidity is high and gases are satisfactorily to be extracted from the surface of the sample 14.

In addition, it is not always necessary to form the assistant combustion agent 5 into a columnar shape as above described. It may be used in for example a spherical shape, cubical shape and the like. And, as to the size of the assistant combustion agent 5, it is only necessary to have a size necessary for the generation of an eddy current when the high-frequency current is passed. For example, a diameter or one side of about 1 to 3 mm is preferable. If the assistant combustion agent 5 is too large in size, the combustion of the sample 14 provides a hindrance.

In addition, a suitable mixing ratio of the tungsten powders 1 and the tin powders 2 is in the range of 80 : 20 to 60 : 40 by weight. If the tin powders 2 are too large in quantity, the quantity of dusts generated is increased.

As above described, an assistant combustion agent for the use in a high-frequency heating furnace according to the present invention is obtained by mixing tungsten powders and tin powders at a predetermined ratio and molding the resulting mixture into a predetermined shape, so that an integrated assembly formed of the mixture comprising tungsten powders and tin powders at the predetermined ratio is pre-prepared and the mixture is superior in uniformity.

Accordingly, by carrying out an analytical operation, it is necessary for achieving a complete combustion of the sample, to charge the predetermined quantity of the assistant combustion agent into the crucible in accordance with the quantity or size of the sample, whereby the desired extraction can be obtained.

According to the present invention, it is not required to weight tungsten and tin separately, whereby the analysis can be efficiently carried out. In particular, the present invention has contributed a great effect with respect to the automation of this type of analysis.

## Claims

1. An assistant combustion agent for use in a high-frequency combustion furnace, **characterized by** comprising tungsten powder and tin powder mixed in a predetermined ratio and molded into a predetermined shape.

2. The assistant combustion agent according to claim 1, **characterized in that** the ratio of tungsten powder to tin is in the range of 80 : 20 to 60 : 40 by weight.

3. The assistant combustion agent according to claim 1, **characterized in that** the predetermined shape is selected from a columnar shape, spherical shape and cubic shape.

# Fig.1

mixture

mold by press

1 mm

1 m.m ⌀

Fig. 2

Fig. 3

Fig. 4